# EUROPÄISCHE PATENTSCHRIFT

(11) **EP 1 609 588 B1**
(45) Veröffentlichungstag und Bekanntmachung des Hinweises auf die Patenterteilung: **02.06.2010**
(21) Anmeldenummer: 05012956.8
(22) Anmeldetag: 16.06.2005
(51) Int. Cl.: B31F 1/07

(54) **Vorrichtung und Verfahren zum Satinieren und Prägen von Flachmaterial**
Apparatus and method for satin-finishing and embossing flat materials
Dispositif et procédé pour satiner et pour gauffrer des matériaux plats

(30) Priorität: 22.06.2004 CH 10422004
(43) Veröffentlichungstag der Anmeldung: 28.12.2005
(73) Patentinhaber: Boegli-Gravures S.A., CH-2074 Marin (CH)
(72) Erfinder: Boegli, Charles, 2074 Marin (CH)
(74) Vertreter: Munk, Ludwig

(56) Entgegenhaltungen:
- EP-A- 0 313 766
- EP-A- 1 437 213
- WO-A-02/30661
- DE-A1- 4 342 737
- DE-A1- 19 833 123
- US-A- 5 862 750

## Beschreibung

Die vorliegende Erfindung bezieht sich auf eine Vorrichtung und ein Verfahren zum Satinieren und Prägen von Flachmaterial mit Prägewalzen gemäss Oberbegriff von Patentanspruch 1.

Derartige Vorrichtungen und Verfahren erlauben es, das Flachmaterial zu satinieren und mit Logos zu versehen. Beim Flachmaterial handelt es sich z.B. um einen sogenannten Innerliner, wie er zur Verpackung in der Tabakindustrie, bei Lebensmitteln wie Schokolade, Kaugummi, etc. und/oder in der pharmazeutischen Industrie verwendet wird. Der Begriff "Innerliner" umfasst alle Art von Folien, inbegriffen Aluminium-kaschiertes Papier, Papier- oder Kunststoff-Folien mit aufgebrachtem Metall, metallisierte Folien, etc. Im Folgenden wird das Flachmaterial der Einfachheit halber "Folie" genannt.

Bei den Prägewalzen handelt es sich im Rahmen dieser Erfindung um eine motorangetriebene Prägewalze mit herausragenden Zähnen und entweder um mindestens eine Gegenwalze mit gleichen erhabenen Zähnen und/oder um Walzen 3 oder 4 gemäss den Figuren 1 und 2, bzw. 10 oder 11 der WO 020/076716 des gleichen Anmelders, d.h. Walzen mit gleichmässig angeordneten, erhabenen Stellen, hier Ringe oder Längsrippen.

Beim Satinieren wird die metallisierte Oberfläche der Folie mit einem regelmässigen Muster mit Submillimeterstrukturen versehen, wodurch sie einen seidenen Glanz erhält. Es werden dabei auch innere Spannungen im Papier ausgeglichen, sodass ein spontanes Zusammenrollen der Folie, insbesondere beim Verpackungsprozess verhindert wird.

Der Begriff "Logo", wie er hier benutzt wird, umfasst alle von den Prägewalzen geprägte Zeichen, dekorative Elemente und/oder Sicherheitsmerkmale.

Eine Vorrichtung zum Satinieren und Prägen ist aus der WO 02/30661 des gleichen Anmelders bekannt. Bei dieser Vorrichtung weisen bestimmte Zähne eine abgewandelte Geometrie auf, beispielsweise eine verringerte Zahnhöhe. Diese erlauben es, die Folie, wie sie u.a. als Verpackung von Tabakwaren oder Lebensmitteln verwendet wird, mit als Sicherheitsmerkmalen dienenden Logos zu versehen, deren Erscheinungsbild in Abhängigkeit des Blickwinkels des Betrachters sowie der Art und des Standortes der Beleuchtungsquelle veränderlich ist. Die geometrische Abwandlungen der Zahngeometrie liegen allesamt im Makrobereich und sind demnach wesentlich grösser als die Wellenlänge des Lichtes, sodass ihr Wellencharakter vernachlässigbar ist und die aus der Strahlenoptik bekannten Effekte wie Reflexion und/oder Brechung zum Tragen kommen. Besonders schwierig zu kopierende Logos wie hologrammähnliche Zeichen oder dergleichen sind mit dieser Vorrichtung nicht erzeugbar.

In der nicht-vorveröffentlichen europäischen Patentanmeldung Nr. 03405886.7 des gleichen Anmelders ist eine Vorrichtung zum Satinieren und Prägen von Flachmaterial beschrieben, deren Prägewalze - nebst etwaigen makrostrukturierten Zähnen mit veränderter Geometrie - bestimmte Mikrostrukturierungen aufweist, die es ermöglichen, mikrostrukturierte Logos zu erzeugen, die weitgehendst fälschungssicher sind. Die Mikrostrukturierungen liegen im Bereich von unter einem Mikrometer bis ca. 30 Mikrometern.

Eine Schwierigkeit beim Herstellen von solchen Prägewalzen kann die Beschaffenheit ihrer Oberfläche bieten. Um diese mit einer vorgegebenen Mikrostrukturierung versehen zu können, muss sie besonders glatt und frei von einer grobkörnigen Struktur sein. Es hat sich gezeigt, dass die Walzen, die mit den bekannten Herstellungsverfahren aus Stahl gefertigt sind, ungeeignet sind, um die gewünschten Mikrostrukturierungen anbringen zu können, da u.a. aufgrund der Körnigkeit des Stahls, die typischerweise im Mikrometerbereich liegt, eine relativ raue und grobkörnige Walzenoberfläche resultiert.

Im Weiteren hat sich gezeigt, dass das gleichzeitige Prägen von mikrostrukturierten Logos an verschiedenen Stellen der Folie äusserst schwierig ist, da dazu an verschiedenen Stellen ein genau definierter, relativ hoher homogener spezifischer Prägedruck erzeugt werden muss.

Ausgehend von diesem Stand der Technik liegt die Aufgabe der vorliegenden Erfindung darin, eine Vorrichtung und ein Verfahren zum Satinieren und Prägen anzugeben, die es ermöglichen, an jeder gewünschten Stelle der Folie mikrostrukturierte Logos zu prägen.

Eine Vorrichtung und ein Verfahren, die diese Aufgabe lösen, ist im Anspruch 1 bzw. In den unabhängigen Verfahrensansprüchen 12 und 14 angegeben. Die weiteren Ansprüche geben bevorzugte Ausführungen an.

Die Erfindung wird im Folgenden anhand von Zeichnungen von Ausführungsbeispielen näher erläutert. Es zeigen
- Fig. 1: eine Prägewalze und eine Gegenwalze in einer sogenannten Pin up-Pin up Konfiguration;
- Fig. 2: eine Detailansicht aus Fig. 1 mit einem Zahn einer Walze, der zwischen vier Zähne der anderen Walze greift;
- Fig. 2A: eine Detailansicht aus Fig. 1 mit acht Zähne einer Walze, die zwischen acht Zähne der anderen Walze greifen;
- Fig. 3: einen Querschnitt gemäss Linie III-III in Fig. 1 beim Ineinandergreifen der Zähne;
- Fig. 4: schematisch die Oberfläche der Prägewalze mit vertiefter Mikrostruktur im Querschnitt;
- Fig. 5: schematisch die Oberfläche der Prägewalze mit erhabener Mikrostruktur im Querschnitt;
- Fig. 6: schematisch in einer Ausschnittvergrösserung einen Schnitt gemäss Linie VI - VI in Fig. 2,
- Fig. 7: schematisch die zum Ausschnitt gemäss Fig. 8 gehörende Gegendruckfläche auf der Gegenwalze;
- Fig. 8: schematisch eine zweite Ausschnittsvergrösserung der Prägewalze aus Fig. 1 mit Mikrostrukturen;
- Fig. 9: eine Variante der beiden Walzen mit Justier- und Synchronisationsmitteln; und
- Fig. 10: schematisch einen Querschnitt durch eine zu prägende bzw. satinierende Folie.

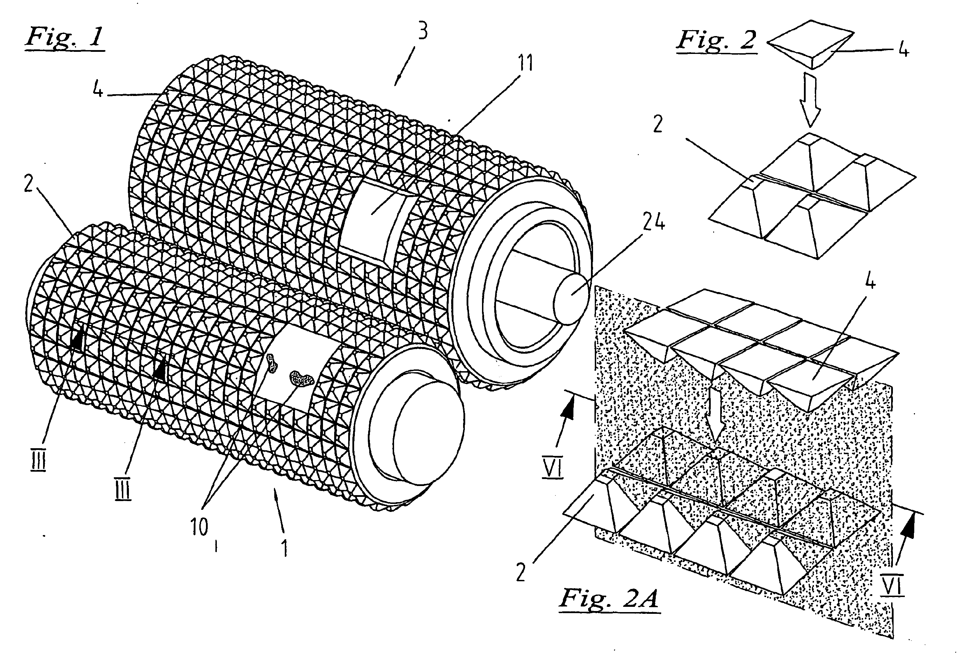

Fig. 1 zeigt eine Prägewalze 1 und eine Gegenwalze 3 in einer sogenannten Pin up-Pin up Konfiguration, d.h., dass beide Walzen mit herausragenden, gleichen Zähnen 2, 4 versehen sind, die zum Antrieb der Gegenwalze und Bearbeiten der Folie gemäss Figur 2 ineinandergreifen.

Die Zähne weisen eine Abflachung auf und sind wie dargestellt pyramidenstumpfförmig. Es sind aber auch andere Zahngeometrien denkbar, beispielsweise kegelstumpfförmige oder halbkugelförmige. Die Höhe der Zähne 2 liegt typischerweise im Bereich von ca. 100 bis ca. 600 Mikrometer.

Wie auch aus Fig. 2 ersichtlich, sind die Walzen so zueinander angeordnet, dass je ein Zahn 2 der einen Walze, hier Prägewalze 1, zwischen vier Zähnen 4 der anderen Walze, hier Gegenwalze 3, greift. Diese Anordnung der Zähne ist u.a. dann anwendbar, wenn die Prägewalze 1 angetrieben ist, während die Gegenwalze 3 bezüglich Walze 1 richtig positioniert frei läuft und über die Zähne bzw. die Folie von der Prägewalze 1 mitgenommen wird.

Die Anordnung der Walzen kann eine ähnliche sein wie gemäss EP-B-0 925 911, bei der die Achse 24 der Gegenwalze 3 in allen drei Koordinatenrichtungen frei oder geführt auslenkbar angeordnet ist, um eine automatische Selbsteinstellung der Position der Gegenwalze in bezug auf die Prägewalze zu ermöglichen.

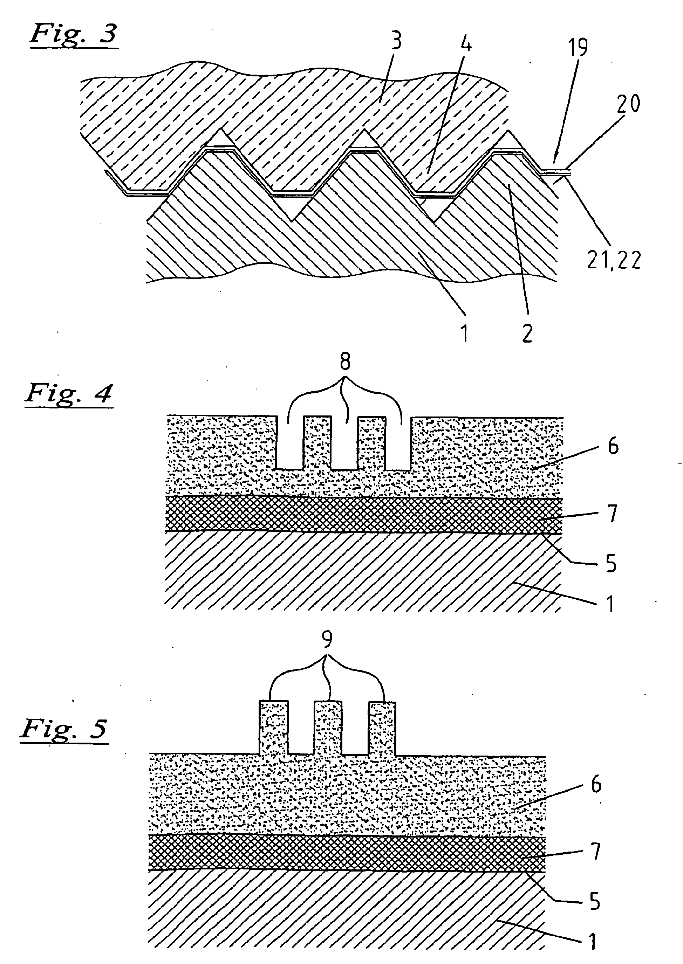

Fig. 3 zeigt das Ineinandergreifen der Zähne 2 und 4, wodurch die dazwischenliegende Folie 19 bearbeitet wird. Daraus geht hervor, dass die Prägewalze 1 auf die Metall-und Zwischenlackschicht 21, 22 wirkt und die Gegenwalze 3 auf die Papier- oder Kunststoffunterlage 20.

Zurückkommend auf Fig. 1 ist auf der Prägewalze 1 ein blanker, hier quadratischer, Bereich 12 angegeben, bei dem die Zähne fehlen, so dass beim Durchgang der Folie zwischen den beiden Walzen der metallisierte Bereich der Folie im entsprechenden Bereich nicht satiniert wird und somit glänzend bleibt. Dies erlaubt es, die Folie mit einem einfachen Logo, insbesondere zu Zwecken der Dekoration, zu versehen. Falls nur ein solches Logo geprägt, bzw. bei diesem blanken Bereich nicht satiniert werden soll, sind auf der Gegenwalze keine Vorkehrungen zu treffen und diese bleibt unbearbeitet.

In Figur 1 sind jedoch Stellen im quadratischen Bereich 12 der Prägewalze 1 mit vorgegebenen Mikrostrukturen 10 versehen. Diese weisen Strukturierungen auf, welche im Bereich von unter 1 Mikrometer bis ca. 30 Mikrometer liegen, sie sind demnach in der Grössenordnung der Lichtwellenlänge. Mittels der Mikrostruktur sind auf der Folie mikrostrukturierte Logos erzeugbar, welche optische Effekte hervorrufen, die an die Wellennatur des Lichtes geknüpft sind, wie Beugung, Interferenz und/oder Polarisation. Solche Logos können sich in Form von farbigen Erscheinungsbildern, Hologrammen oder hologrammähnliche Mustern, etc. manifestieren. Eine einfache Mikrostruktur ist z.B. ein Gitter, wie es aus der Optik bekannt ist, wobei die Gitterabstände im Bereich von unter 1 Mikrometer bis ca. 30 Mikrometer liegen.

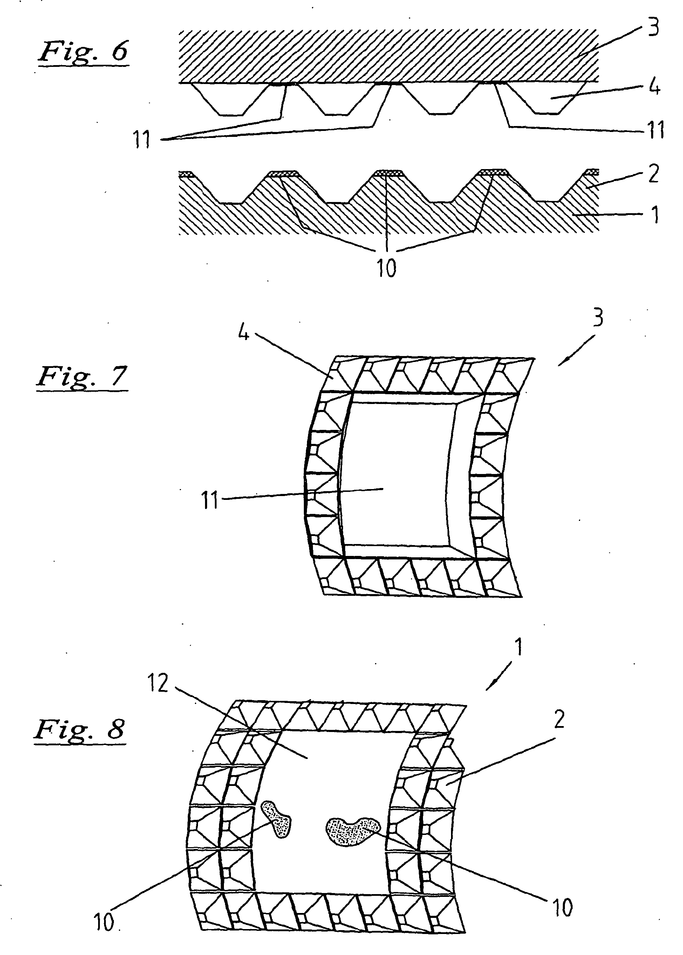

Um einen genügend hohen Prägedruck im Bereich der Mikrostrukturierung zu erreichen, ist es notwendig, auf der Gegenwalze an den entsprechenden Stellen Gegendruckflächen 11 anzubringen. In den Figuren 1 und 7 sind diese Gegendruckflächen als eine komplementäre, quadratische Gegendruckfläche 11 dargestellt. Diese Gegendruckfläche ist in der Regel nicht strukturiert, da sie auf die Papier- oder Kunststoffseite der Folie wirkt. Falls jedoch eine dazu geeignete Folie auf beiden Seiten geprägt werden soll, kann die Gegendruckfläche ebenfalls strukturiert oder mikrostrukturiert sein.

Zur Herstellung der Gegendruckfläche muss diese Stelle zuerst geglättet werden, beispielsweise mittels Ionenstrahl und auf diesem geglätteten Untergrund kann z.B. das Verfahren der Laserpulsabscheidung angewendet werden, um die Dicke der Schicht der Gegendruckfläche, bzw. ihr Abstand zur Mikrostruktur, genau einzustellen.

Der blanke Bereich 12 mit den Mikrostrukturen 10 sowie die Gegendruckfläche 11 sind in den Figuren 7 und 8 vergrössert dargestellt.

Die Mikrostrukturen werden durch geeignete Behandlung der Walzenoberfläche geschaffen. Wie eingangs erläutert, haben die Walzen, insbesondere wenn sie aus Metall hergestellt sind, eine in der Regel zu raue bzw. körnige Oberfläche, um sie im Mikrometerbereich strukturieren zu können. Die Körnigkeit von Stahl beispielsweise liegt typischerweise im Mikrometerbereich.

Damit nun die Walzenoberfläche an den gewünschten Stellen mit einer vorgegebenen Mikrostruktur versehbar ist, wird vorgängig die Walzenoberfläche zumindest an diesen Stellen geglättet, beispielsweise mittels Ionenstrahl, und dann eine zusätzliche homogene Oberflächenschicht angebracht, die mikrostrukturierbar ist. Dies ist in Fig. 4 und 5 vereinfachend illustriert. Die Walzenoberfläche 5, die vor der Behandlung bei diesem Vergrösserungsmassstab relativ ausgeprägte Profilkuppen bzw. -täler aufweist, ist nach dem Glättungsprozess relativ eben. Die Oberflächenschicht 6 weist dadurch ebenfalls eine relativ ebene Grundfläche auf, die, entsprechend der vorgegebenen Mikrostruktur 10, mit Vertiefungen bzw. Erhöhungen versehen ist.

Es hat sich gezeigt, dass Oberflächenschichten mit genügender Härte u.a. auf Stahl schlecht haften, sodass sie schon durch relativ geringe Kräfte abgeschert werden können. Es ist davon ausgehend zweckmässig, zwischen der Oberflächenschicht 6 und der eigentlichen Walzenoberfläche 5 eine Zwischenschicht 7 vorzusehen, die als Haftungsschicht für die Oberflächenschicht 6 dient. Durch Verwendung einer geeigneten Zwischenschicht 7 ist es möglich, ein Verbindung zwischen der harten Oberflächenschicht 6 und der Walzenoberfläche 5 zu schaffen, die sich durch eine hohe Haftfestigkeit auszeichnet. Die Zwischenschicht 7 kann von geringer Härte als die Oberflächenschicht 6 sein und sich unter Umständen aus mehreren verschiedenen Materialien zusammensetzen, die in die Grundschicht diffundieren.

Wie in Fig. 4 und 5 schematisch angedeutet, sind die Vertiefungen z.B. durch Nuten 8 und die Erhöhungen durch Stege 9 gebildet, die jeweils in einem Abstand von wenigen Mikrometern angeordnet sind. Natürlich sind je nach Anwendungszweck auch andere Mikrostrukturen denkbar, wie gekrümmt verlaufende Vertiefungen und/oder Erhöhungen.

Die Oberflächenschicht 6 ist hart, d.h. sie ist im Mittel mindestens so hart wie die Walzenoberfläche 5, sodass die übliche Standzeit der Walzen 1, 3 nicht reduziert ist. Ist beispielsweise die Walze 1 aus Stahl als Grundmaterial hergestellt, so wird als Oberflächenschicht 6 ein zumindest gleich hartes Material verwendet. Die harte Oberflächenschicht 6 garantiert, dass die Mikrostruktur auch bei einem hohen spezifischen Prägedruck unbeschädigt bleibt und ein vorzeitiger Verschleiss der Walze 1 verhindert wird.

Zum Anbringen der Oberflächenschicht 6 hat sich u.a. die sogenannte Laserpulsabscheidung ("pulsed laser deposition") als geeignet erwiesen. Bei diesem Verfahren wird zuerst die zu beschichtende Oberfläche 5 in einer geeigneten Anlage durch Ionenbeschuss geglättet bzw. gereinigt und aktiviert. Dann wird die haftvermittelnde Zwischenschicht 7 z.B. in Form einer speziellen hexagonalen Bornitrid-Phase und anschliessend die Oberflächenschicht 6 in Form von kubischem Bornitrid (c-BN) durch Abtrag von einem Bor- oder Bornitridtarget mittels Excimer-Laserstrahlung bei gleichzeitigem kontinuierlichen Stickstoff- bzw. Stickstoff/Argon-Ionenstrahlbeschuss erzeugt. Für weitere Details wird z.B. auf die Patentschrift DE-A1-198 33 123 verwiesen.

Das angewandte Verfahren zeichnet sich u.a. durch eine hohe Aufwachsrate von 60 nm/min aus, sodass die Herstellung von mikrostrukturierten Walzen im industriellen Massstab möglich ist. Der Reibungskoeffizient für c-BN-Schichten liegt im Bereich von 0,1. Die Vickers-Mikrohärte gemessen bei einer Prüfkraft von 10 Newton (cf. auch DIN 50133) liegt für c-BN-Schichten im Bereich von 40 bis 45 GPa. Stahl hat typischerweise eine Vickers-Mikrohärte im Bereich von 1 GPa.

Nebst c-BN-Schichten sind auch andere harte Schichten wie Wolfram oder diamantartige Kohlenstoffschichten als Oberflächenschicht denkbar (cf. dazu den zur Publikation in der Zeitschrift "Applied Physics A" vorgesehenen Artikel von Günter Reisse, Steffen Weissmantel und Dirk Rost, "Preparation of super-hard coatings by pulsed laser deposition").

Dem Fachmann sind nebst der Laserpulsabscheidung andere additive Verfahren zugänglich, welche es erlauben, die Walzenoberfläche mit einer geeigneten Oberflächenschicht 6 und gegebenenfalls Zwischenschicht 7 zur Haftvermittlung zu versehen. Das vorgängige Glätten der Walzenoberfläche ist z.B. auch mittels Schleifen und/oder Läppen möglich.

Falls die Oberfläche der Walzen aus einem anderen Material als Stahl besteht, beispielsweise aus Kupfer oder mit Keramik überzogen ist oder die ganze Walze aus Keramik besteht, ist es gegebenenfalls nicht notwendig, diese Oberfläche mit einer Schicht zu versehen und sie kann dann direkt mit Mikrostrukturen versehen werden.

Die Mikrostrukturierung der Oberflächenschicht 6 erfolgt z.B. durch Anwendung von geeigneten Laseranlagen, die über Masken die Oberflächenschicht subtraktiv bearbeiten. Mittels der erwähnten Verfahren zum Aufbringen und Mikrostrukturieren einer Oberflächenschicht eröffnet sich die Möglichkeit, die Oberfläche der Prägewalze 1 gezielt an den gewünschten Stellen mit einer vorgegebenen Mikrostruktur 10 zu versehen. Dies braucht nicht notwendigerweise in einem blanken Bereich 12 der Fall sein.

In Fig. 6 ist ein Beispiel illustriert, welches einen vergrösserten Schnitt gemäss der Linie VI - VI in Fig. 2A zeigt. Die Querschnittsebene in Fig. 6 verläuft in Längsrichtung der Prägewalze 1 durch die Zahnspitzen, wie dies in Fig. 2A durch die Pfeile VI - VI angedeutet ist. Den Zahnspitzen steht gemäss der in Fig. 2A gezeigten Pin up-Pin up Konfiguration der Bereich zwischen den Zähnen der Gegenwalze 3, d.h. der Zahngrund, entgegen, welcher in Fig. 6 durch ein ebenes Profil dargestellt ist, wobei die Zähne hinter der Schnittebene sichbar sind. In Fig. 6 sind mehrere benachbarte Zahnspitzen der Prägewalze 1 mit einer Mikrostruktur 10 versehen.

Von diesen wenigen Beispielen ausgehend können eine Vielfalt von Mikrostrukturen und gegebenenfalls auch Makrostrukturen auf der Prägewalze 1 angebracht werden, die eine entsprechend grosse Vielfalt von Mustern auf der Folie ergeben. Die Prägewalze 1 kann grossflächig oder lokal begrenzt auf Teilbereiche mit einer vorgegebenen Mikrostruktur versehen werden.

Fig. 8 zeigt den blanken, hier quadratischen, Bereich 12 der Prägewalze 1, der mit zwei Mikrostrukturen 10 versehen ist. Um den nötigen Prägedruck für die Mikrostrukturen auf der Folie erzeugen zu können, bedarf es im Prinzip an den den Mikrostrukturen 10 entsprechenden Stellen der Gegenwalze 3 je einer Gegendruckfläche. Beim Vorliegen eines blanken Bereichs, in welchem die Mikrostrukturen angebracht sind, muss auf der Gegenwalze jedoch ein gleicher Bereich als Gegendruckfläche verwendet werden, wobei es dann keine Rolle spielt, wieviele Mikrostrukturen im blanken Bereich vorhanden sind.

In Figur 7 ist demnach eine Gegendruckfläche 11 in der Form des blanken Bereichs 12 von Walze 1 angebracht worden, die für beide Mikrostrukturen 10 gilt. Dadurch ist gewährleistet, dass der Abstand zwischen der Mikrostruktur und der Gegendruckfläche genügend klein ist, um den erforderlichen Prägedruck erzeugen zu können.

Während in der Regel die Prägewalze bearbeitet wird, um ein Logo, das auch mikrostrukturiert sein kann, zu prägen und die Gegenwalze nur Gegendruckflächen aufweist, die den Mikrostrukturen entsprechen, können die Mikrostrukturen auch auf der Gegenwalze und die Gegendruckflächen auf der Prägewalze sein.

Um u.a. zu gewährleisten, dass sich die Gegendruckflächen 11 in axialer und radialer Richtung an den richtigen Stellen bezüglich der Mikrostrukturen befinden, sind an den Walzen 1, 3 Justiermittel, beispielsweise in Form von Justierringen und Justierzähnen angebracht. Die Justiermittel erlauben es, bei der Montage die relative Position der beiden Walzen 1, 3 genau zueinander einstellen zu können. Im Weiteren können die beiden Walzen 1, 3 zwangssynchronisiert sein, beispielsweise mittels Zahnräder oder anderer Synchronisationsmittel wie elektronischer Bauelemente und dergleichen.

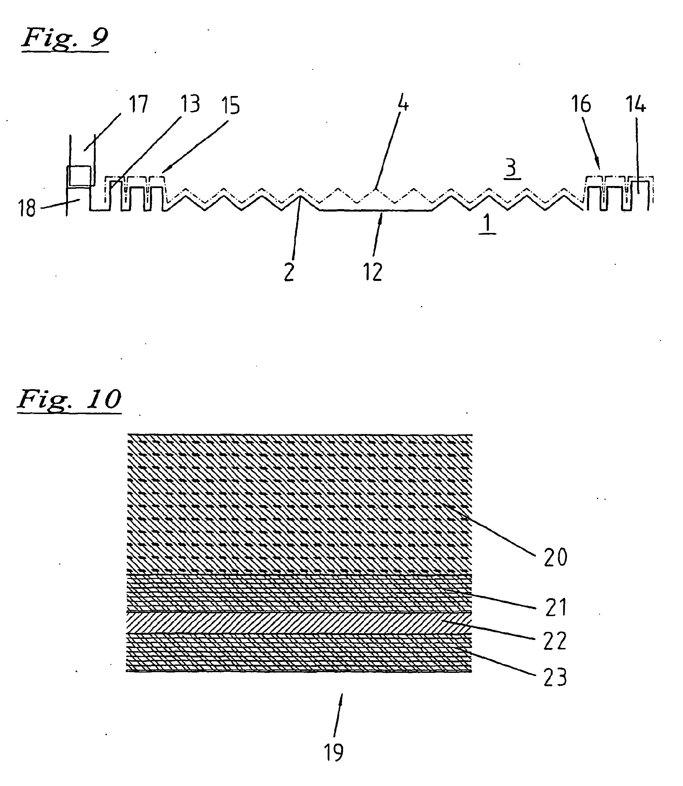

Fig. 9 zeigt in einer vereinfachten Seitenprojektion die beiden Walzen 1 und 3, deren Zähne 2 und 4 in Eingriff stehen. Die Walzen 1, 3 sind endseitig mit einem Justierring 13, 14 und mit Justierzähnen 15, 16 versehen, die gröber als die übrigen Zähne 2, 4 sind und sind mittels der Zahnräder 17 und 18 zwangssynchronisiert. Es können aber auch nur einzelne Justiermittel verwendet werden.

Wie bereits eingangs erwähnt, kann die Prägevorrichtung mehr als eine Gegenwalze aufweisen, z.B. auch gemäss WO 02/076716 zwei gezähnte Gegenwalzen oder eine oder mehrere Gegenwalzen mit Ringen oder eine oder mehrere Gegenwalzen mit Längsrippen.

Ein besonders vorteilhaftes Verfahren zum Satinieren und Prägen von insbesondere mikrostrukturierten Logos ergibt sich, wenn die Folie 19 mindestens eine thermoplastische Schicht, z.B. eine Lackzwischenschicht, umfasst, so dass durch Erhitzen die Schicht verformbar wird. In der Verpackungsindustrie wird beispielsweise eine Folie verwendet, wie sie in der nicht massstabgetreuen Fig. 10 im Querschnitt gezeigt ist. Die Folie 19 umfasst eine Papierfaserstruktur 20 von 10 bis 100 Mikrometer Dicke, deren Oberfläche mit einer Lackzwischenschicht 21 von 1 bis 5 Mikrometer Dicke versehen ist. Auf diese ist eine feine Schicht 22 Metall, z.B. Aluminium, mit einer Dicke von einigen etwa 15 bis 20 nm aufgedampft, die selbst durch eine ebenfalls sehr feine Decklackschicht 23 geschützt ist.

Falls Prägen auf beiden Seiten der Folie gewünscht ist, kann diese beidseits des Papiers eine Lackzwischenschicht aufweisen.

Mittels Erhitzen der Folie auf eine Temperatur, die typischerweise in einem Bereich von 70°C bis 120°C liegt, kann der lokale Prägedruck wesentlich gesenkt werden, der zum Erzeugen der Mikroprägung erforderlich ist. Die Prägung wird dadurch im Wesentlichen nur in die Lackzwischenschicht 21 eingebracht und nicht auf die Gesamtfolie. Da die Metallschicht 22 sehr dünn ist, sind die durch die Mikroprägung erzeugten optischen Effekte ohne weiteres von Auge wahrnehmbar.

Die Folie wird beispielsweise erhitzt, indem die Prägewalze 1 und/oder die Gegenwalze 3 und/oder der Bereich der Mikrostruktur mittels Heizmitteln auf eine entsprechende Heiztemperatur gehalten ist. Es ist auch denkbar, die Folie zu erhitzen, bevor sie zwischen den Walzen 1 und 3 hindurchgeführt wird. Ausserdem kann zur Erweichung einer geeigneten thermoplastischen oder Zwischenlackschicht eine dazu geeignete Strahlungsquelle, z.B.eine UV-Strahlungsquelle, verwendet werden.

In einer weiterführenden Variante können die Heizmittel so gewählt sein, dass der Bereich der Mikrostruktur(en) gezielt auf Heiztemperatur oder Normaltemperatur gebracht werden kann. Dadurch ist möglich, die Mikrostruktur(en) sozusagen zu aktivieren bzw. deaktivieren, sodass die Folie an der entsprechenden Stelle entweder mit der Mikroprägung versehen wird oder unversehrt bleibt. Als Heizmittel ist z.B. ein Infrarotlaser in Kombination mit einem Glasfaserbündel und/oder geeigneter Optik verwendbar, um Energie lokal zuführen zu können.

Aus den erfindungsgemässen Vorrichtungen und Verfahren ergeben sich folgende Vorteile bzw. werden bereits bekannte, gute Eigenschaften gewahrt:
- Es können Walzen, die eine raue Oberflächenstruktur aufweisen, insbesondere solche aus Stahl oder Keramik, direkt mittels Prägen mit Mikrostrukturen versehen werden.
- Es sind u.a. die in der Verpackungsindustrie üblicherweise eingesetzten Folien bearbeitbar.
- Folien mit einer Schicht, die beim Erhitzen verformbar wird, sind bei einem niedrigeren Prägedruck prägbar, wobei bei metallisierten Innerliner präzise Mikroprägungen erzeugbar sind. Im Weiteren ist aufgrund des niedrigeren Prägedrucks der Verschleiss der Walzen vermindert.
- Die Folien können an beliebigen Stellen mit Zeichen geprägt werden, deren Erscheinungsbild sich je nach Blickwinkel des Betrachters und/oder Art und/oder Standort der Beleuchtungsquelle ändert, insbesondere diffraktive

Farbeffekte oder hologrammähnliche Zeichen. Dies bietet ein hohes Mass an Fälschungssicherheit, da die lokalgravierten Mikroeffekte schwer oder kaum nachzumachen sind, insbesondere dann, wenn mehrere Mikrostrukturen verwendet werden, um die Folie an verschiedenen Stellen mit mikrostrukturierten Logos zu versehen. In Kombination mit anderen bekannten prägetechnischen Verfahren, wie die sogenannte Schattenprägung, kann eine Folie mit Sicherheitsmerkmalen versehen werden, die ähnlich denjenigen von Geldscheinen ist.

## Patentansprüche

1. Vorrichtung zum Satinieren und Prägen von Folien mit zumindest einer metallisierten Oberfläche, mit:
einer ersten Walze mit erhabenen Zähnen und mindestens einer zweiten Walze mit erhabenen Zähnen, erhabenen Ringen oder erhabenen Längsrippen, wobei die metallisierte Oberfläche der Folie mit einem regelmäßigen Muster mit Submillimeterstrukturen versehen wird,
**dadurch gekennzeichnet, dass**
mindestens eine der Walzen (1, 3) mindestens eine Mikrostruktur (10) mit Strukturierungen im Bereich von unter 1 Mikrometer bis ca. 30 Mikrometer aufweist und mindestens eine der anderen Walzen an der der Mikrostruktur entsprechenden Stelle mit einer Gegendruckfläche (11) versehen ist, um einen genügend hohen Prägedruck im Bereich der Mikrostruktur (10) zu erreichen.

2. Vorrichtung nach Anspruch 1, **dadurch gekennzeichnet, dass** die Mikrostruktur (10) auf einer dazu geeigneten, geglätteten Oberflächenschicht (6) aufgebracht ist.

3. Vorrichtung nach Anspruch 1 oder 2, **dadurch gekennzeichnet, dass** zwischen der Oberflächenschicht (6) mit Mikrostruktur (10) und der Walzenoberfläche (5) eine Zwischenschicht (7) als Haftschicht aufgebracht ist und die Oberflächenschicht (6) mindestens so hart ist wie die Oberfläche der Walze.

4. Vorrichtung nach einem der Ansprüche 1 bis 3, **dadurch gekennzeichnet, dass** die erste Walze (1) einen zahnfreien Bereich (12) aufweist, in welchem die mindestens eine Oberflächenschicht (6) mit Mikrostruktur (10) angeordnet ist.

5. Vorrichtung nach einem der Ansprüche 1 bis 4, **dadurch gekennzeichnet, dass** die Oberflächenschicht (6) und/oder Haftungsschicht (7) und/oder Gegendruckfläche (11) durch Laserpulsabscheidung hergestellt sind und vorzugsweise Bornitrid enthalten.

6. Vorrichtung nach einem der Ansprüche 1 bis 5, **dadurch gekennzeichnet, dass** die Walzen (1, 3) Justiermittel (13, 14; 15, 16) und/oder Synchronisationsmittel (17, 18) enthalten.

7. Vorrichtung nach einem der Ansprüche 1 bis 6, **dadurch gekennzeichnet, dass** die Walze mit der mindestens einen Mikrostruktur (10) die mit einem Antrieb verbundene Prägewalze (1) ist und sich die mindestens eine Gegendruckfläche (11) auf der freilaufenden Gegenwalze (3) befindet.

8. Vorrichtung nach Anspruch 7, **dadurch gekennzeichnet, dass** die Walzen (1, 3) nachgiebig gegeneinander anpressbar sind und die Achse (24) der Gegenwalze (3) in allen drei Raumkoordinatenrichtungen auslenkbar ist.

9. Vorrichtung nach einem der Ansprüche 1 bis 8, **dadurch gekennzeichnet, dass** sie eine auf die Folie wirkende Strahlungs- und/oder Wärmequelle aufweist.

10. vorrichtung nach einem der Ansprüche 1 bis 9, **dadurch gekennzeichnet, dass** das zu bearbeitende Flachmaterial eine Folie (19) ist, die eine auf eine Grundschicht (20) aus Papier oder Kunststoff aufgebrachte Lackzwischenschicht (21) und eine darauf aufgebrachte Metallschicht (22) aufweist.

11. Vorrichtung nach Anspruch 10, **dadurch gekennzeichnet, dass** die Folie ferner eine Lackdeckschicht (23) aufweist.

12. Verfahren zum Satinieren und Prägen einer Folie gemäß den Ansprüche 10 oder 11, **dadurch gekennzeichnet, dass** eine Vorrichtung gemäß einem der Ansprüche 1 bis 9 verwendet wird und die Lackzwischenschicht (21) zumindest im Bereich erweicht wird, der durch die Mikrostruktur (10) geprägt wird.

13. Verfahren nach Anspruch 12, **dadurch gekennzeichnet, dass** die mit der Mikrostruktur (10) versehene Walze (1) und/oder die Folie (19), bevor sie zwischen den Walzen (1, 3) hindurchgeführt wird, erhitzt wird.

14. Verfahren zum Satinieren und Prägen einer Folie **dadurch gekennzeichnet, dass** eine Vorrichtung gemäß einem der Ansprüche 1 bis 9 verwendet wird und die Folie beidseitig geprägt wird.

## Claims

1. A device for satin-finishing and embossing of sheeting having at least one metallised surface, comprising
a first roller with raised teeth and at least one second roller with raised teeth, raised rings or raised longitudinal ribs, with the metallised surface of the sheeting being provided with a regular pattern of submillimeter structures, **characterised in that** at least one of the rollers (1, 3) comprises at least one microstructure (10) having structures in the region of less than 1 micron up to approx. 30 microns and that at least one of the other rollers at a point corresponding to the microstructure is provided with a counter pressure surface (11) in order to achieve a sufficiently high embossing pressure in the area of the microstructure (10).

2. A device in accordance with claim 1, **characterised in that** the microstructure (10) is applied to an appropriate, smoothed surface layer (6).

3. A device in accordance with claim 1 or 2, **characterised in that** between the surface layer (6) with microstructure (10) and the roller surface (5) an intermediate layer (7) is applied as an adhesive layer and further that the surface layer (6) is at least as hard as the roller surface.

4. A device in accordance with any of the claims 1 to 3, **characterised in that** the first roller (1) has a tooth-free area (12) in which provision is made for at least one surface layer (6) with microstructure (10).

5. A device in accordance with any of the claims 1 to 4, **characterised in that** the surface layer (6) and/or the adhesive layer (7) and/or the counter pressure surface (11) are produced by laser pulse deposition and preferably contain boron nitride.

6. A device in accordance with any of the claims 1 to 5, **characterised in that** the rollers (1, 3) comprise adjusting means (13, 14; 15, 16) and/or synchronisation means (17, 18).

7. A device in accordance with any of the claims 1 to 6, **characterised in that** the roller with the at least one microstructure (10) constitutes the embossing roller (1) which is connected with a drive means and that the at least one counter pressure surface (11) is provided on the free running counter roller (3).

8. A device in accordance with claim 7, **characterised in that** the rollers (1, 3) are resiliently pressable against each another and that the axis (24) of the counter roller (3) is deflectable in all three space coordinate directions.

9. A device in accordance with any of the claims 1 to 8, **characterised in that** it comprises a radiation and/or heat source acting upon the sheet.

10. A device in accordance with any of the claims 1 to 9, **characterised in that** the flat material to be processed is a sheet (19) comprising an intermediate lacquer coat (21), which is applied to a base layer (20) of paper or plastic, and further a metal coat (22) applied to the said intermediate lacquer coat (21).

11. A device in accordance with claim 10, **characterised in that** the sheet further comprises a lacquer cover coating (23).

12. A device for satin-finishing and embossing of sheeting in accordance with the claims 10 or 11, **characterised in that** a device in accordance with any of the claims 1 to 9 is used and that the intermediate lacquer coat (21) is softened at least in the area which is embossed by the microstructure (10).

13. A device in accordance with claim 12, **characterised in that** the roller (1) provided with the microstructure (10) and/or the sheeting (19) is heated before the latter is fed between and through the rollers (1, 3).

14. A device for satin-finishing and embossing of sheeting **characterised in that** a device in accordance with any of the claims 1 to 9 is used, and that the sheeting is embossed on both sides.

## Revendications

1. Dispositif pour satiner et gaufrer des feuilles ayant au moins une surface métallisée, comprenant :
un premier cylindre à dents en relief et au moins un second cylindre à dents en relief, à anneaux en relief ou à nervures longitudinales en relief, la surface métallisée de la feuille étant pourvue d'un motif régulier ayant des structures submillimétriques,
**caractérisé par le fait que**
l'un au moins des cylindres (1, 3) présente au moins une microstructure (10) ayant des structurations comprises entre moins de 1 micromètre et 30 micromètres à peu près et que l'un au moins des autres cylindres est pourvu, à l'endroit correspondant à la microstructure, d'une contre-surface de pression (11) afin d'atteindre une pression de gaufrage suffisamment élevée au niveau de la microstructure (10).

2. Dispositif selon la revendication 1, **caractérisé par le fait que** ladite microstructure (10) est appliquée sur une couche de surface (6) lissée qui s'y prête.

3. Dispositif selon la revendication 1 ou 2, **caractérisé par le fait qu'**une couche intermédiaire (7) est appliquée comme couche adhésive entre ladite couche de surface (6) ayant la microstructure (10) et la surface de cylindre (5) et que ladite couche de surface (6) présente une dureté au moins égale à celle de la surface du cylindre.

4. Dispositif selon l'une quelconque des revendications 1 à 3, **caractérisé par le fait que** ledit premier cylindre (1) présente une zone exempte de dents (12) dans laquelle est disposée ladite au moins une couche de surface (6) ayant la microstructure (10).

5. Dispositif selon l'une quelconque des revendications 1 à 4, **caractérisé par le fait que** la couche de surface (6) et/ou la couche adhésive (7) et/ou la contre-surface de pression (11) sont réalisées par la déposition par impulsion laser et contiennent, de préférence, du nitrure de bore.

6. Dispositif selon l'une quelconque des revendications 1 à 5, **caractérisé par le fait que** les cylindres (1, 3) comprennent des moyens d'ajustage (13, 14 ; 15, 16) et/ou des moyens de synchronisation (17, 18).

7. Dispositif selon l'une quelconque des revendications 1 à 6, **caractérisé par le fait que** le cylindre comprenant ladite au moins une microstructure (10) est le cylindre de gaufrage (1) relié à un mécanisme d'entraînement et que ladite au moins une contre-surface de pression (11) se trouve sur le contre-cylindre (3) tournant librement.

8. Dispositif selon la revendication 7, **caractérisé par le fait que** lesdits cylindres (1, 3) peuvent être pressés l'un contre l'autre de manière flexible et que l'axe (24) du contre-cylindre (3) peut être dévié dans toutes les trois directions des coordonnées spatiales.

9. Dispositif selon l'une quelconque des revendications 1 à 8, **caractérisé par le fait qu'**il présente une source de rayonnement et/ou de chaleur agissant sur ladite feuille.

10. Dispositif selon l'une quelconque des revendications 1 à 9, **caractérisé par le fait que** le matériau plat à usiner est une feuille (19) qui présente une couche intermédiaire de vernis (21) appliquée sur une couche de base (20) en papier ou en matière plastique ainsi qu'une couche métallique (22) appliquée sur cette couche intermédiaire de vernis.

11. Dispositif selon la revendication 10, **caractérisé par le fait que** ladite feuille comprend en outre une couche de recouvrement de vernis (23).

12. Procédé pour satiner et gaufrer une feuille selon les revendications 10 ou 11, **caractérisé par le fait que** l'on utilise un dispositif selon l'une quelconque des revendications 1 à 9 et que ladite couche intermédiaire de vernis (21) est ramollie au moins dans la zone qui est gaufrée par la microstructure (10).

13. Procédé selon la revendication 12, **caractérisé par le fait que** le cylindre (1) pourvu de la microstructure (10) et/ou la feuille (19) est chauffé(e), cette dernière avant de la faire passer entre les cylindres (1, 3).

14. Procédé pour satiner et gaufrer une feuille, **caractérisé par le fait que** l'on utilise un dispositif selon l'une quelconque des revendications 1 à 9 et que ladite feuille est gaufrée sur les deux faces.
